Europäisches Patentamt

**European Patent Office**

**Office européen des brevets**

(11) Numéro de publication: **0 435 302 A1**

# DEMANDE DE BREVET EUROPEEN

(21) Numéro de dépôt: **90125617.2**

(22) Date de dépôt: **28.12.90**

(51) Int. Cl.5: **A23B 7/02**, A23B 7/024, A23L 3/015, A23L 3/40, A23L 3/44

(30) Priorité: **29.12.89 FR 8917413**

(43) Date de publication de la demande:
**03.07.91 Bulletin 91/27**

(84) Etats contractants désignés:
**AT BE CH DE DK ES FR GB GR IT LI LU NL SE**

(71) Demandeur: **Blaizat, Claude**
**20, rue des Bluets**
**F- 75011 Paris(FR)**

(72) Inventeur: **Blaizat, Claude**
**20, rue des Bluets**
**F- 75011 Paris(FR)**

(54) **Procédé et dispositif de déshydratation totale ou partielle de produits végétaux.**

(57) Procédé de déshydratation totale ou partielle de morceaux de produits entiers de végétaux du type légumes, fruits, fleurs, dispositif de déshydratation et produit correspondants.

Le procédé selon l'invention est remarquable en ce qu'il consiste en une succession d'étapes : mise sous vide de l'enceinte (1) dans laquelle sont disposés les produits parés sur des plateaux (4), chauffage de la paroi de l'enceinte (1), introduction de vapeur d'eau dans l'enceinte (1), remise sous vide de celle-ci, chauffage des plateaux (4), remise à la pression atmosphérique de l'enceinte (1). Application à l'agro-alimentaire.

FIG.

## PROCEDE ET DISPOSITIF DE DESHYDRATATION TOTALE OU PARTIELLE DE PRODUITS VEGETAUX.

La présente invention concerne un procédé de déshydratation totale ou partielle de morceaux de produits et/ou produits entiers de végétaux du type légumes, fruits, fleurs, le dispositif de déshydratation approprié et le produit ainsi déshydraté.

L'intérêt de déshydrater des produits végétaux réside essentiellement dans la conservation prolongée de ceux-ci. En effet, il est particulièrement intéressant de stocker des produits végétaux pour qu'ils soient toujours à la disposition de la ménagère quelque soit la saison, et de préférence des produits végétaux qui ne s'altèrent pas avec le temps. Ainsi, le consommateur peut consommer ces produits après une déshydratation réalisée il y a plus ou moins longtemps. Un type de consommateurs très intéressés par ces produits est représenté par les navigateurs solitaires voyageant sur les mers et océans, qui désirent, malgré leur isolement, continuer à avoir une hygiène alimentaire égale ou équivalente à celle qu'ils ont lorsqu'ils se trouvent à terre. D'autres catégories de la population sont également intéressées par ces produits déshydratés : tout simplement la ménagère qui, par souci de rapidité et de confort matériel, achète ce type de produits.

Différentes techniques de déshydratation existent.

La première technique, qui est la plus connue, est le procédé traditionnel qui remonte à la plus Haute Antiquité. Il consiste tout simplement en une exposition au soleil de produits végétaux cuits. Par exemple, les pruneaux sont aujourd'hui encore déshydratés par ce procédé dans les pays méditerranéens. Ce procédé présente le grand avantage de conserver par exemple aux pruneaux leurs qualités gustatives de façon remarquable. Cependant, ce procédé présente l'inconvénient majeur de la nécessité d'une grande surface disponible pour la mise en oeuvre de ce procédé.

Un second procédé de déshydratation, plus moderne, consiste en la lyophylisation. Il s'agit d'une sublimation à basse température réalisée sous vide qu'on fait subir à certains produits (le plus connu étant le café). On procède dans un premier temps à une surgélation, puis on "sublime" l'eau en créant une dépression de $10^{-3}$ à 1 mm de Hg. Lors de la surgélation, l'eau contenue dans les produits se transforme de liquide en glace et, par conséquent, fait éclater les cellules du produit, ce qui permet de ce fait aux grosses molécules, et notamment celles produisant ou étant des parfums, de s'évaporer conjointement avec l'eau. La seule situation où le départ de ce type de molécules est moins important correspond à la surgélation faite par trempage dans l'azote liquide car le mode de cristallisation du produit est alors différent. Ce procédé très utilisé présente l'inconvénient de faire perdre aux produits une grande partie de leurs qualités organoleptiques.

Un troisième procédé de déshydratation de produits végétaux très connu également est le séchage par air chaud. On fait circuler de l'air chaud sur les produits à déshydrater à une température de l'ordre de 70°C pendant des dizaines d'heures, ce qui revient en fait à une véritable cuisson des produits, c'est-à-dire à un éclatement des cellules et, par conséquent, une perte de leurs qualités gustatives.

Il est évident que pour certaines utilisations en alimentation, dont par exemple les préparations à réhydratation rapide, telles que les potages, entremêts et plats prêts à l'emploi, les produits déshydratés par les deux derniers procédés ci-dessus décrits sont très utilisés et présentent un succès certain, même si les produits ont perdu de leurs qualités gustatives.

La présente invention a pour but de remédier à ces différents inconvénients et de créer un nouveau procédé de déshydratation utilisant un nouveau dispositif pour fabriquer des produits végétaux conservant leurs qualités organoleptiques et gustatives par rapport aux produits déshydratés selon les trois procédés de déshydratation ci-dessus décrits.

Pour atteindre ce but, l'inventeur a eu l'agréable surprise de retenir le procédé décrit dans le FR 2 425 812 qui concerne un procédé pour le traitement thermique en continu de produits alimentaires qu'il a modifié et d'utiliser le dispositif décrit dans le FR 2 489 101 qui concerne notamment un dispositif de réfrigération d'un produit agricole, qu'il a également modifié.

L'invention concerne un procédé de déshydratation totale ou partielle de morceaux crus et/ou cuits et/ou de produits entiers de végétaux du type légumes, fruits ou grains, caractérisé en ce qu'il comporte les étapes suivantes :
- introduction des produits parés dans une enceinte hermétique, dont les parois peuvent être chauffées, qui sont placés sur une zone de support,
- mise sous vide de l'enceinte à une pression partielle d'air comprise entre 1 et 20 millibars et, simultanément à cette étape,
- chauffage de la paroi de l'enceinte à une température supérieure de 1 à 10°C à la température désirée au niveau des produits,
- introduction de vapeur d'eau dans l'enceinte à une pression comprise entre 150 millibars et 3 bars pendant une durée comprise entre 10 s et 30 mn suivant la profondeur sur laquelle le produit doit être chauffé,

- remise sous vide de l'enceinte à une pression comprise entre 7 et 25 millibars,
- mise en communication de l'enceinte contenant les produits parés avec un dispositif de chauffage indépendant de celle-ci,
- chauffage de la zone de support et, par conséquent, des produits parés, pour leur séchage, pendant une période de temps de 1 à 10 heures suivant le pourcentage d'eau résiduelle du produit voulu,
- remise à la pression atmosphérique de l'enceinte.

Ainsi, cette déshydratation permet d'obtenir des délais de conservation de plusieurs années pour les produits contenant moins de 5% d'eau en fin d'opération et des délais de 1 à 3 mois pour les produits auxquels on retire 20 à 50 % de leur eau suivant leur nature.

Ce procédé exclut toute congélation du produit. En effet, grâce à ce procédé, les barrières cellulaires ne sont pas cassées, à l'inverse de la congélation ou du chauffage (supérieur à 80°C).

De façon préférentielle, les zones de support des produits parés disposées dans l'enceinte sont des plateaux. Elles peuvent aussi consister en des grilles par exemple.

De façon avantageuse, le dispositif de chauffage, destiné au chauffage des plateaux chauffants de l'enceinte contenant les produits parés, contient de la zéolithe conformément au réacteur à zéolithe décrit dans le brevet FR 2 489 101.

Préférentiellement, le séchage est réalisé à basse température, de l'ordre de 0 à 25°C.

Selon l'invention, il est proposé en complément du procédé de déshydratation totale ou partielle un dispositif de déshydratation pour la mise en oeuvre de ce procédé.

La présente invention présente l'avantage d'une mise en oeuvre aisée du procédé de déshydratation, peu coûteuse puisque le dispositif est associé à un dispositif à base de zéolithe, donc non consommateur d'énergie. Cette mise en oeuvre ne nécessite pas un personnel nombreux puisque le procédé fonctionne en automatique et continu.

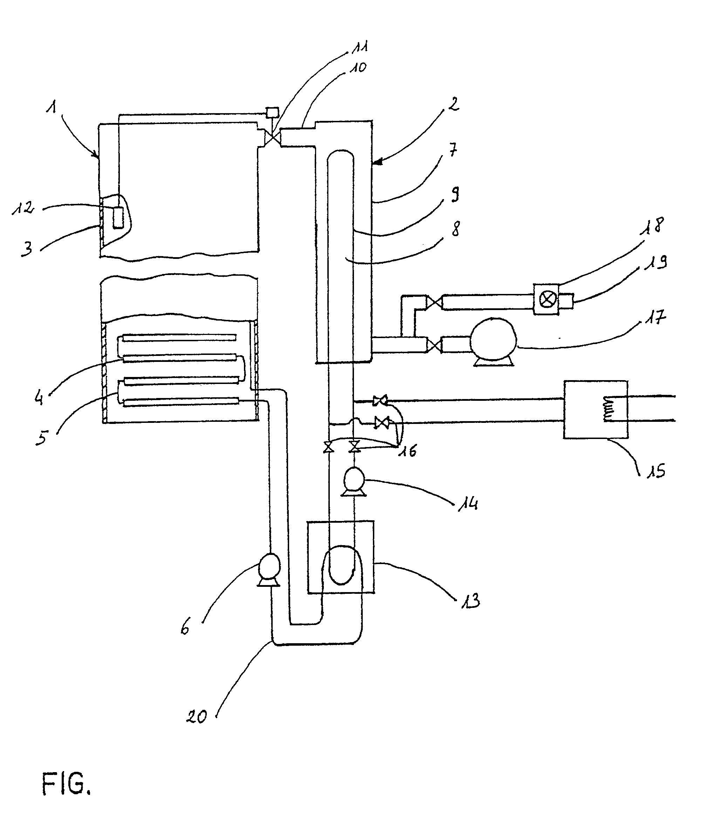

Les autres caractéristiques et avantages de l'invention résulteront de la description qui suit en référence à la figure annexée qui est une vue très schématique d'une forme d'exécution non limitative d'un dispositif selon l'invention, représentant les différents appareils ouverts.

Selon l'invention, il est proposé un procédé de déshydratation et un dispositif pour la mise en oeuvre de ce procédé.

L'invention s'applique à un produit végétal qui perd au moins une partie de l'eau qu'il contient initialement, sans aucun préjudice pour ses qualités substantielles.

Le procédé est mis en oeuvre dans un dispositif de déshydratation comportant une enceinte 1 dans laquelle sont introduits les produits parés à déshydrater, un dispositif de chauffage 2 extérieur à l'enceinte 1 et de nombreux moyens techniques permettant de réaliser les différentes étapes du procédé de déshydratation.

L'enceinte 1 est constituée d'un bâti 3 étanche, de moyens d'introduction et d'évacuation des produits parés à déshydrater, moyens étanches, de moyens de visualisation, contrôle, sécurité des produits parés contenus dans l'enceinte 1. Ils ne sont pas représentés sur la figure.

L'intérieur de l'enceinte 1 comporte des plateaux 4 disposés les uns sur les autres horizontalement. Ils sont creux et reliés les uns aux autres par une même canalisation 5 de façon à être parcourus par le fluide caloporteur, de préférence de l'eau, et donc à être chauffés, comme cela est décrit plus loin. L'introduction d'eau dans les plateaux 4 est facilitée par une pompe de circulation 6. Les plateaux 4 sont destinés à porter les produits parés pour la déshydratation.

Le dispositif de chauffage 2 est constitué d'une cartouche 7 étanche dans laquelle est placé un adsorbant 8 représenté schématiquement. Ce dispositif de chauffage 2 est indépendant et extérieur à l'enceinte 1.

L'adsorbant 8 peut être un corps de préférence solide dont le rôle est d'adsorber la vapeur d'eau des produits parés. L'adsorbant 8 peut être régénéré par extraction de la vapeur d'eau adsorbée par lui-même. Il s'agit de préférence de zéolithes. Un circuit de fluide 9 caloporteur, de préférence d'huile, est disposé dans la cartouche 7, destiné à la refroidir lors du fonctionnement.

L'enceinte 1 est reliée au dispositif de chauffage 2 au moyen d'une tubulure 10 qui peut être constituée de plusieurs raccords, non représentée sur la figure. Sur cette tubulure 10 est disposée une vanne 11, présentant un rôle d'arrêt et de réglage. Lorsqu'elle joue le rôle de réglage, elle est associée à une mesure de pression totale 12 de l'enceinte 1 permettant ainsi d'entretenir dans l'enceinte une pression totale différente de celle dans la cartouche 7. Elle est de préférence à commande automatique mais peut être aussi commandée manuellement.

Le dispositif de chauffage 2 comprend un circuit d'huile 9 qui n'est pas relié directement au circuit de la canalisation d'eau 5. Lors du fonctionnement du dispositif, l'huile du circuit 9 est chaude, ce qui permet de chauffer, par l'intermédiaire d'un échangeur à paroi 13, l'eau de la canalisation 5. L'huile chaude va donc chauffer l'eau par simple échange thermique. L'huile circule dans le circuit 9 grâce à une pompe de circulation 14 permettant d'assurer soit la circulation d'huile chaude provenant de la chaudière 15, soit le refroidissement de l'huile chaude grâce au jeu de vannes 16.

L'enceinte 1 est reliée à des moyens de dépression 17, des moyens d'extraction 18 et des moyens de stockage 19 par un système de canalisations et de vannes, et par l'intermédiaire de la cartouche 7. Ces spécificités techniques sont décrites de façon précise dans le brevet FR 2 489 101.

Le dispositif qui vient d'être décrit ci-dessus fonctionne de la manière suivante :

On introduit les produits parés sur les plateaux 4 de l'enceinte 1. On ferme l'enceinte 1 de façon hermétique. On fait le vide de l'enceinte jusqu'à atteindre une pression partielle d'air comprise, à l'intérieur de l'enceinte 1, entre 1 et 20 millibars tout en chauffant les parois de l'enceinte 1 à une température qui est fonction de celle qu'on veut avoir au niveau des produits parés. On introduit de la vapeur d'eau dans l'enceinte 1 à une pression comprise entre 150 mbars et 3 bars pendant une durée comprise entre 10 secondes et 30 minutes suivant la profondeur sur laquelle le produit paré doit être chauffé. On remet ensuite l'enceinte 1 sous vide entre 7 et 25 mbars. Puis, on met en communication l'enceinte 1 et le dispositif de chauffage 2 en ouvrant la vanne 11 et les autres vannes 14, 16. L'adsorbant 8, ici de la zéolithe, contenu dans le dispositif de chauffage 2 joue son rôle de fixateur de la vapeur d'eau provenant du produit à déshydrateret, par conséquent, chauffe. Un circuit d'huile 9 est disposé en partie à l'intérieur du dispositif de chauffage 2, et à l'extérieur. L'huile froide va se réchauffer au contact de la zéolithe chaude qui va chauffer de l'eau par l'intermédiaire d'un échangeur à paroi 13. Cette eau circule dans un circuit 20 et va chauffer les plateaux 4 successivement par le biais d'une pompe de circulation 6. Le circuit d'eau 20, comme le circuit d'huile 9, fonctionne de façon indépendante ; la température de l'eau peut être réglée par injection d'eau froide provenant du circuit d'eau de l'usine non représenté ici.

La mesure de la pression totale 12 de l'enceinte 1 permettant de connaître la pression totale de l'enceinte agit sur la vanne 11. Elle est ouverte lorsque la pression totale désirée de l'enceinte 1 n'est pas atteinte et, inversement, elle est fermée lorsque cette pression totale désirée est dépassée.

Une fois l'opération terminée, l'enceinte 1 est remise à la pression atmosphérique de façon à l'ouvrir et récupérer les produits parés déshydratés.

Des exemples de déshydratation ont été réalisés à l'aide du procédé et du dispositif ci-dessus décrits.

Exemple 1 : Déshydratation de "Champignons de Paris" (marque déposée)

On a paré des "Champignons de Paris" (Marque déposée) en tranches d'environ 3 mm d'épaisseur. On les dispose ensuite en couches de l'ordre de 3 cm d'épaisseur sur les plateaux 4 de l'enceinte 1, à une température de 15°C. On établit une pression totale de 7 à 8 mbar dans l'enceinte,ce qui correspond à une pression partielle d'air de l'ordre de 1 mbar ; la température des champignons est de l'ordre de 2 à 5°C. On arrête l'extraction, créée par la pompe 17, par fermeture de la vanne correspondante. L'adsorption réalisée dans le système de chauffage 2 a fait monter la température de la zéolithe aux environs de 70°C. On a établi la circulation d'eau et d'huile par mises en route successives des pompes de circulation 6 et 14. Par introduction d'eau froide dans le circuit d'eau 20, on maintient la température des plateaux chauffants 4 à 60°C. La pression totale de l'enceinte 1 est maintenue à 10 mbar automatiquement par réglage du point de consigne de la vanne 11. La mesure de température dans un morceau de champignon indique alors 8°C. Après 4 heures de fonctionnement dans ces conditions, on ramène la température des plateaux à 40°C. Environ 5h30 après la mise en fonctionnement, la température mesurée dans un morceau de champignon se rapproche de 25 à 30°C, ce qui indique un taux de déshydratation acceptable.

Après la déshydratation on enlève les champignons du dispositif de déshydratation et on les emballe dans des sacs en matière plastique multicouche, métallisée en aluminium; les sacs sont stockés à température ambiante.

Au bout de trois mois, on réalise un premier test de dégustation : on met les champignons dans une omelette ; l'omelette cuit de façon traditionnelle. Les champignons retrouvent une consistance et un goût identiques à ceux des champignons frais.

Il est à noter que les morceaux de champignons ainsi déshydratés perdent environ 20 % de leur volume initial mais présentent une résistance "mécanique" (meilleure consistance)bien supérieure à un même produit lyophilisé.

On peut établir un bilan économique : par kg d'eau retirée, la quantité de chaleur à forunir à la zéolithe pour la désorption de l'eau et le chauffage des échangeurs est de 1600 millithermies, soit environ 2 KW.

Exemple 2 : Déshydratation de cubes de pommes.

Après avoir paré les pommes du type "Golden", on coupe les pommes en cubes d'environ 1 cm de côté.

Le mode de réalisation est identique à celui de l'exemple 1.

Les produits à la fin de la déshydratation mesurent environ 8 mm de côté et n'ont pas changé de couleur d'une façon appréciable.

A l'issue du même temps de stockage (3 mois) et la même méthode de conservation, la dégustation des cubes de pommes donne une saveur très agréable, aussi agréable qu'avec des pommes fraîches.

## Revendications

1. Procédé de deshydratation totale ou partielle de morceaux crus et/ou cuits et/ou de produits entiers de végétaux du type légumes, fruits ou grains comprenant les étapes d'introduction des produits parés dans une enceinte hermétique (1), dont les parois peuvent être chauffées, qui sont placés sur une zone de support, de mise sous vide de l'enceinte (1) à une pression partielle d'air comprise entre 1 et 20 millibars et, simultanément à cette étape, de chauffage de la paroi de l'enceinte (1) à une température supérieure de 1 à 10 °C à la température désirée au niveau des produits, d'introduction de vapeur d'eau dans l'enceinte (1) à une pression comprise entre 150 millibars et 3 Bars pendant une durée comprise entre 10 s et 30 mn suivant la profondeur sur laquelle le produit doit être chauffé, de remise sous vide de l'enceinte (1) à une pression comprise entre 7 et 25 millibars, procédé caractérisé par les étapes ultérieures de:
   - mise en communication de l'enceinte (1) contenant les produits parés avec un dispositif de chauffage (2) indépendant de celle ci.
   - chauffage de la zone support et, par conséquent des produits parés, pour leur séchage, pendant une durée de 1 a 10 heures suivant le pourcentage d'eau résiduelle du produit voulu.
   - remise à la pression atmosphérique de l'enceinte (1).
   - arrêt du fonctionnement du dispositif de chauffage (2) indépendant de l'enceinte (1) où est réalisé la deshydratation et,
   - sortie des produits parés deshydratés.

2. Procédé selon la revendication 1, caractérisé en ce que les zones de support des produits parés disposés dans l'enceinte (1) sont des plateaux (4).

3. Procédé de deshydratation selon la revendication 1 ou 2, caractérisé en ce que le dispositif de chauffage (2), destiné au chauffage des plateaux (4) chauffants de l'enceinte (1) contenant les produits parés, contient de la zéolithe.

4. procédé selon l'une des revendications précédentes, caractérisé en ce que le séchage est réalisé à une température comprise entre 0 et 25° C.

5. Dispositif de deshydratation pour la mise en oeuvre du procédé selon l'une des revendications précédentes, comportant une enceinte (1) destinée à recevoir les produits parés à deshydrater, à laquelle sont éventuellement associés des moyens pour faire le vide dans cette enceinte (1) caractérisé en ce que l'enceinte (1) du dispositif de deshydratation comporte en outre des zones de support sur lesquelles sont disposés les produits parés qui sont chauffés directement par une canalisation (20) dans laquelle circule un fluide caloporteur provenant d'un disposif de chauffage (2) indépendant de l'enceinte (1).

6. Dispositif selon la revendication 5, caractérisé en ce que les zones de support sont des plateaux (4).

7. Dispositif selon les revendications 5 et 6, caractérisé en ce que ledit dispositif de chauffage (2) indépendant de l'enceinte (1) contient de la zéolithe.

8. Produit deshydraté caractérisé en ce qu'il est réalisé à partir du procédé de deshydratation selon l'une quelconque des revendications 1 à 4 et à l'aide du dispositif de deshydratation selon l'une des revendications 5 à 7.

FIG.

**Office européen des brevets**

# RAPPORT DE RECHERCHE EUROPEENNE

Numéro de la demande

**EP 90 12 5617**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | FR-A-2 489 101   (C. BLAIZAT)<br>* En entier *<br>— — — | 1,2,3,5 | A 23 B<br>7/02<br>A 23 B 7/024 |
| D,Y | EP-A-0 006 369   (P.P.M. KIBLEUR)<br>* Page 1, lignes 1-13; page 2, ligne 24 - page 3, ligne 24<br>* & FR-A-2 425 812<br>— — — | 1,2,3,5 | A 23 L 3/015<br>A 23 L 3/40<br>A 23 L 3/44 |
| A | FR-A-1 546 981   (H.J. HEINZ CO., LTD)<br>— — — | | |
| A | FR-A-8 687 76   (M.C.C. BOILEAU)<br>— — — | | |
| A | US-A-2 163 628   (O.H. PICKEY)<br>— — — | | |
| A | US-A-3 453 741   (C. JUDSON et al.)<br>* Revendications 1,3 *<br>— — — | 1,3,7 | |
| A | US-A-4 685 305   (S.P. BURG)<br>— — — | | |
| A | US-A-4 655 048   (S.P. BURG)<br>— — — — — | | |

| | |
|---|---|
| | **DOMAINES TECHNIQUES RECHERCHES (Int. Cl.5)**<br><br>A 23 L<br>A 23 B |

Le présent rapport de recherche a été établi pour toutes les revendications

| Lieu de la recherche | Date d'achèvement de la recherche | Examinateur |
|---|---|---|
| La Haye | 15 mars 91 | GUYON R.H. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

&: membre de la même famille, document correspondant